# DEMANDE DE BREVET EUROPEEN

(11) **EP 0 933 114 A2**
(43) Date de publication de la demande: **04.08.1999**
(21) Numéro de dépôt: 99420017.8
(22) Date de dépôt: 21.01.1999
(51) Int. Cl.: B01D 29/23, B01D 29/48, B01D 29/64, B01D 33/067, B01D 33/11, B01D 33/46

(54) **Dispositif de filtration d'une suspension contenant des fibres et des fines indésirables**

(30) Priorité: 29.01.1998 FR 9801250
(71) Demandeur: SA Cellier Groupe, 73100 Aix Les Bains (FR)
(72) Inventeur: Bastien, Christophe, 73100 Aix Les Bains (FR)
(74) Mandataire: Palix, Stéphane (FR)

(57) **Abrégé**

Dispositif de filtration d'une suspension contenant des fibres et des fines indésirables, comprenant :
- une enceinte (2) comportant deux ouvertures, respectivement une ouverture d'amenée (4) et une ouverture de sortie (5) pour la suspension à filtrer ;
- un panier filtrant cylindrique (6) disposé à l'intérieur de l'enceinte (2) et destiné à être traversé par la suspension à traiter, ledit panier (6) présentant une porosité calibrée, formé par une pluralité de fils profilés rigides parallèles (10) enroulés en hélice, pour ménager entre eux un faible espacement (15) destiné à retenir les fibres ou fines indésirables de la suspension à traiter ;
- un racle de décolmatage venant au contact d'une des faces du panier (6) ;
- et des moyens pour entraîner en rotation le racle par rapport au panier (6),
**caractérisé** en ce que les fils profilés parallèles (10) du panier (6) forment un angle α d'au moins 5° par rapport aux génératrices du panier (6).

## Description

### Domaine Technique

L'invention concerne un dispositif de filtration d'une suspension, plus particulièrement de liquides à haute concentration et à forte viscosité, chargée en fibres et des fines indésirables, largement utilisé pour le couchage du papier.

### Techniques antérieures

La filtration de suspension fortement chargée en fibres et des fines indésirables, est un problème bien connu dans l'industrie papetière.

Dans une forme de réalisation commercialisée avec succès par le Demandeur sous l'appellation « FILTERCEL - ACS », et décrite en partie dans le document EP-A-0 783 912 correspondant au brevet américain US 5 779 901, ce dispositif de filtration comprend :
- une enceinte comportant deux ouvertures, respectivement une ouverture d'amenée et une ouverture de sortie pour la suspension à filtrer ;
- un panier filtrant cylindrique disposé à l'intérieur de l'enceinte et destiné à être traversé par la suspension à traiter, ledit panier présentant une porosité calibrée, formé par une pluralité de fils profilés rigides parallèles enroulés en hélice, pour ménager entre eux un faible espacement destiné à retenir les fibres ou fines indésirables de la suspension à traiter ;
- un racle de décolmatage venant au contact d'une des faces du panier ;
- et des moyens pour entraîner en rotation le racle par rapport au panier.

Le passage de la suspension à travers le panier filtrant provoque le dépôt de particules voire d'agglomérats sur la face interne (ou externe) du panier. Ce colmatage est d'autant plus rapide que la suspension contient une quantité élevée de contaminants ou de particules de taille importante telles que des fibres ou des fines indésirables.

C'est la raison pour laquelle on associe au panier filtrant un racle de décolmatage, notamment du type décrit dans le document EP-A-0 783 912 visé ci-dessus.

Dans une forme de réalisation pratique, les fils profilés rigides du panier sont des fils métalliques profilés, notamment à section triangulaire à angles arrondis, enroulés en hélice à très faible pas, puisque ces fils forment par rapport aux génératrices du panier un angle de l'ordre seulement du dixième de degré.

Bien que commercialisé avec succès, ce type de panier présente l'inconvénient de favoriser un colmatage par incrustation des fibres ou des fines dans l'espacement entre les fils profilés rigides parallèles sensiblement horizontaux. Par ailleurs, ce type de panier laisse passer une proportion appréciable de fibres et de fines indésirables.

### Exposé de l'Invention

L'invention concerne un dispositif de filtration ne présentant pas les inconvénients ci-dessus.

Ce dispositif de filtration d'une suspension contenant des fibres et des fines indésirables, comprenant :
- une enceinte comportant deux ouvertures, respectivement une ouverture d'amenée et une ouverture de sortie pour la suspension à filtrer ;
- un panier filtrant cylindrique disposé à l'intérieur de l'enceinte et destiné à être traversé par la suspension à traiter, ledit panier présentant une porosité calibrée formée par une pluralité de fils profilés rigides parallèles enroulés en hélice, pour ménager entre eux un faible espacement destiné à retenir les fibres ou fines indésirables de la suspension à traiter ;
- un racle de décolmatage venant au contact d'une des faces du panier ;
- et des moyens pour entraîner en rotation le racle par rapport au panier,
se caractérise en ce que les fils profilés parallèles du panier forment un angle d'au moins 5° par rapport aux génératrices du cylindre.

En d'autres termes, l'invention consiste dans les paniers filtrants du type en question, à ne plus disposer les fils profilés rigides parallèles enroulés en hélice avec un pas très faible pour être sensiblement horizontaux, mais au contraire, à leur faire former un angle a d'au moins 5° par rapport aux génératrices du panier.

De manière surprenante, cette disposition évite de manière spectaculaire le colmatage.

Il va de soi que l'angle caractéristique a est ici exprimé en valeur absolue et peut indistinctement être positif ou négatif par rapport à une méridienne. Il importe que les fils profilés ne soient pas parallèles aux méridiennes, ce qui conduirait à l'encrassement-colmatage décrit dans le préambule, ou ne soient pas parallèles aux génératrices, ce qui conduirait à une usure prématurée des racles.

Avantageusement, en pratique :
- l'angle formé entre les profilés et les génératrices du panier est compris entre 5 et 85°, de préférence entre 30 et 45°;
- comme décrit dans le document EP-A-0 783 912 visé dans le préambule, le racle est associé à une caisse aspirante rotative autour de l'axe de révolution du panier ;
- les fils profilés sont en acier inoxydable de section triangulaire à angles arrondis de section comprise entre 0,7 et 1,4 mm, dont la base est dirigée du côté du racle ;
- les fils profilés parallèles inclinés définissent entre eux un espacement de 50 à 200 micromètres.

Dans une première forme de réalisation, le racle est fixe et le panier rotatif autour de son axe de révolution.

Dans une seconde forme de réalisation préférée, le panier est fixe et le racle est rotatif à l'intérieur du panier.

La caractéristique essentielle de l'invention réside dans l'inclinaison des fils profilés parallèles par rapport aux génératrices du panier.

Selon la caractéristique principale, cette inclinaison doit être d'au moins 5°. En effet, on a observé que si cette inclinaison était inférieure à 5°, on avait néanmoins à la longue la formation d'un colmatage. De même, si cette inclinaison excède 60°, on observe des pertes trop importantes lors de la fabrication du panier, et on augmente l'usure du racle lorsqu'il vient lécher en permanence la face du panier.

Dans la technique antérieure selon laquelle les fils parallèles du panier filtrant sont sensiblement horizontaux, comme les dimensions caractéristiques des fibres et des fines sont plus petites par rapport à la longueur de la fente, ces fibres passent sans difficulté à travers le panier. En revanche, les fibres qui sont trop grosses, bien qu'étant en très faible proportion, ou qui constituent des flocs, colmatent rapidement le panier. Par contre, lorsque les fils parallèles du panier de filtration sont inclinés, les fibres ou les fines indésirables et les contaminants ne peuvent plus s'aligner dans les fentes ménagées entre les fils et sont ainsi beaucoup mieux arrêtées par le panier.

En d'autres termes, dans la réalisation selon l'invention selon laquelle les fils sont inclinés par rapport aux génératrices et par voie de conséquence les fentes ménagées entre ces fils sont également inclinées, la dimension de la fente dans le plan de l'écoulement est fortement diminuée et l'efficacité de la filtration est fortement améliorée sans que l'aspect de filtration des pigments eux-mêmes ou autres contaminants soit changé.

On a observé également que la filtration des fibres est encore améliorée si la vitesse de rotation du racle est augmentée, du fait de l'augmentation de la composante tangentielle.

Si le plus généralement, les fentes ménagées entre les fils caractéristiques inclinés sont rectilignes, elles peuvent être également curvilignes.

### Description sommaire des dessins

La manière de réaliser l'invention et les avantages qui en découlent ressortira mieux de la description du mode de réalisation qui suit, à l'appui des figures annexées dans lesquelles :
- la figure 1 est une vue de côté d'un dispositif de filtration conforme à l'invention dans lequel l'enceinte est ouverte et le panier extrait au dessus ;
- la figure 2 est une coupe d'une représentation de dessus d'un panier conforme à l'invention ;
- la figure 3 est une représentation schématique d'un panier conforme à l'invention.

### Manière de réaliser l'Invention

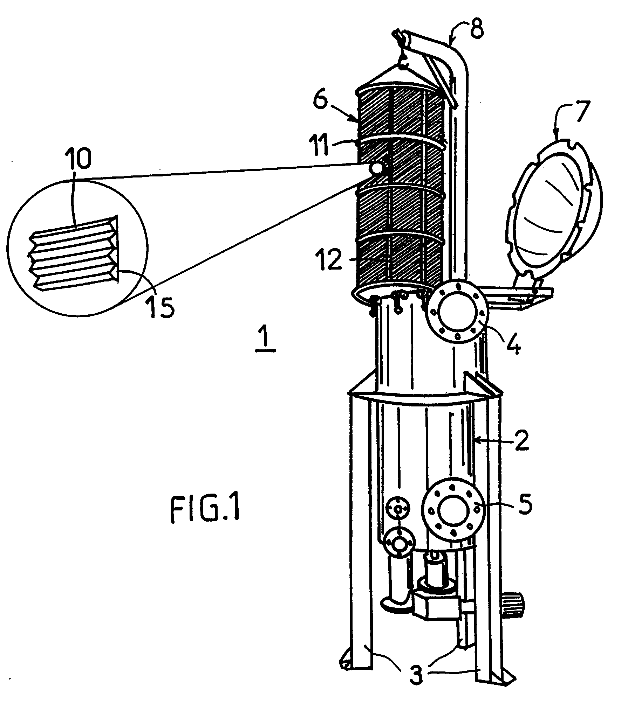

Le dispositif (1) de filtration d'une suspension papetière contenant des fibres et des fines indésirables tel qu'illustré à la figure 1, comprend essentiellement une enceinte cylindrique (2) surélevée par montage sur des pieds (3). Cette enceinte comprend vers le haut une ouverture d'amenée (4) de la suspension à filtrer, et vers le bas une ouverture de sortie (5) de la suspension traitée.

A l'intérieur de l'enceinte, se trouve un panier filtrant (6) que l'on peut extraire en ouvrant le couvercle supérieur (7), et dont la manutention est facilitée par une potence (8) attenante à l'enceinte. Ce panier filtrant (6) de forme cylindrique est réalisé par l'enroulement en forme d'hélice d'un fil profilé rigide (10). Ces fils sont maintenus en position par des entretoises (11) et des montants (12). Les fils caractéristiques inclinés (10) ménagent entre eux un faible espacement (15) destiné à retenir les contaminants indésirables de la suspension à traiter.

En pratique, le seuil de coupure, c'est-à-dire l'espacement (15), est compris entre 50 et 500 micromètres, de préférence entre 100 et 200 micromètres.

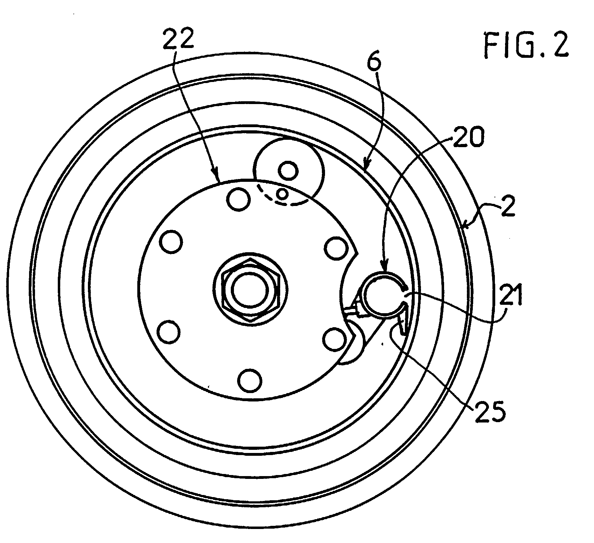

En se référant à la figure 2, le dispositif de filtration comporte également une caisse aspirante (20) de forme cylindrique ou autre, dont l'ouverture (21) se trouve en regard d'une génératrice de la cartouche filtrante (6), cette caisse aspirante étant associée à des moyens (22) de mise en rotation de la caisse aspirante (20) pour lui permettre de parcourir toute la périphérie interne de la cartouche (6). La caisse aspirante (20), et plus précisément son ouverture (21), a une longueur au moins égale à la hauteur du panier. Cette caisse aspirante est associée à un collecteur permettant d'évacuer les impuretés filtrées récupérées. Cette caisse aspirante est également associée à un racle (25) constitué par une tôle longitudinale en matériau dur, tel que céramique ou métal traité détaillé dans le document EP-A-0 783 912 du Demandeur visé dans le préambule.

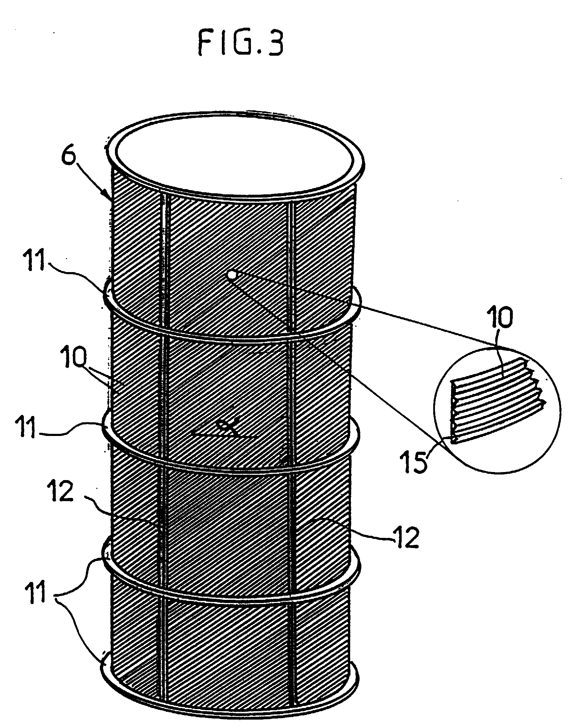

Selon une caractéristique essentielle de l'invention (voir figure 3), les fils (10) profilés rigides parallèles sont inclinés par rapport aux génératrices souples du panier (6), de manière à former un angle a d'au moins 5°, et dans le cas exemplifié, de 30°. Ces fils profilés (10) présentent une section triangulaire à angles arrondis de section de 0,76 mm, et dont la base est dirigée du côté du racle. L'espacement (15) entre deux fils profilés parallèles inclinés est de 100 micromètres.

Le diamètre interne du panier (6) est de 350 millimètres.

On utilise une pâte témoin d'une forte suspension pigmentaire pour le couchage du papier contenant des contaminants divers, tels que des fils de cellulose de 0,6 à 3 mm de longueur, des charges minérales agglomérées dont la dimension moyenne est de l'ordre de la dizaine de micromètres, des liants et des additifs usuels.

La vitesse de passage de cette suspension filtrée au travers du panier est d'environ 0,1 mètre par seconde.

Dans une première forme de réalisation, le panier (6) est réalisé de manière traditionnelle, c'est-à-dire en forme à l'état de la technique visé dans le préambule, c'est-à-dire au moyen des fils profilés de mêmes caractéristiques, mais enroulés en hélice de manière sensiblement horizontale avec le même espacement. Après une heure, on observe une légère incrustation des fibres dans les fentes (15) et un colmatage significatif au bout d'une semaine.

On remplace alors ce panier par un panier selon l'invention dans lequel les fils sont inclinés, comme montré à la figure 3, de 30°. Après une semaine, on n'a pas de colmatage. En outre, on améliore la filtrabilité de la suspension.

Le fait que les fils profilés soient inclinés par rapport aux génératrices, évite lors de la rotation des racles d'enfoncer les fibres ou autres particules dans les fentes (15), et ainsi de colmater prématurément le panier.

Ces fibres ou ces particules contaminantes indésirables sont alors soulevées par le racle et sont évacuées par le système destiné à capter les rejets. De ce fait, la marche du dispositif est considérablement prolongé entre deux lavages, car à chaque rotation, la surface du panier est propre grâce au contact des racles.

Le panier caractéristique (6) de l'invention peut être fabriqué par tout mode connu.

Dans une forme de réalisation, on enroule les fils profilés sur un mandrin cylindrique support sensiblement perpendiculaire aux génératrices, de manière à ce que les fils soient horizontaux, c'est-à-dire non inclinés. On découpe ensuite linéairement ce panier selon une génératrice, et on retourne l'ensemble que l'on décale en l'amenant bord à bord pour avoir l'inclinaison voulue. On découpe alors les extrémités pour obtenir un cylindre que l'on soude.

### Possibilité d'applications industrielles

Le dispositif de filtration de suspension conforme à l'invention permet donc d'éviter le colmatage.

De la sorte, il peut être utilisé avec succès non seulement dans l'application papetière décrite, notamment pour le couchage du papier, mais également dans des compositions d'enduction pour le papier ou le carton, pour le traitement des eaux blanches de papeterie, pour la fabrication des peintures, des vernis, des colles ou analogues, voire même de produits chimiques, pharmaceutiques, alimentaires ou autres.

## Revendications

1. Dispositif de filtration d'une suspension contenant des fibres et des fines indésirables, comprenant :
- une enceinte (2) comportant deux ouvertures, respectivement une ouverture d'amenée (4) et une ouverture de sortie (5) pour la suspension à filtrer ;
- un panier filtrant cylindrique (6) disposé à l'intérieur de l'enceinte (2) et destiné à être traversé par la suspension à traiter, ledit panier (6) présentant une porosité calibrée, formé par une pluralité de fils profilés rigides parallèles (10) enroulés en hélice, pour ménager entre eux un faible espacement (15) destiné à retenir les fibres ou fines indésirables de la suspension à traiter ;
- un racle de décolmatage venant au contact d'une des faces du panier (6);
- et des moyens pour entraîner en rotation le racle par rapport au panier (6),
**caractérisé** en ce que les fils profilés parallèles (10) du panier (6) forment un angle α d'au moins 5° par rapport aux génératrices du panier (6).

2. Dispositif de filtration selon la revendication 1, caractérisé en ce que l'angle α est compris entre 5 et 85°.

3. Dispositif de filtration selon la revendication 2, caractérisé en ce que l'angle α est compris entre 30 et 45°.

4. Dispositif de filtration selon la revendication 1, caractérisé en ce que le racle (25) est associé à une caisse aspirante (20) rotative autour de l'axe de révolution du panier (6).

5. Dispositif de filtration selon la revendication 1, caractérisé en ce que le racle (25) est fixe et en ce que le panier (6) est rotatif autour de son axe de révolution.

6. Dispositif de filtration selon la revendication 1, caractérisé en ce que les fils profilés rigides (10) sont en acier inoxydable de section triangulaire à angles arrondis de section comprise entre 0,7 et 1,4 mm, dont la base est dirigée du côté du racle (25).

7. Dispositif de filtration selon l'une des revendications 1 à 6, caractérisé en ce que les fils profilés parallèles rigides inclinés (10) définissent entre eux un espacement (15) de 50 à 200 micromètres.
